# EUROPEAN PATENT APPLICATION

(11) **EP 4 635 776 A2**
(43) Date of publication of application: **22.10.2025**
(21) Application number: 25166328.2
(22) Date of filing: 26.03.2025
(51) Int. Cl.: B60L 3/00, B60L 58/20, H01M 10/44, H02J 7/00

(54) **HYBRID CELL CHEMISTRIES IN ELECTRIC DRIVES**

(30) Priority: 27.03.2024 US 202418618682
(71) Applicant: Volvo Car Corporation, 405 31 Göteborg (SE)
(72) Inventor: Norouzzadeh, Alireza, SE-405 31 Göteborg (SE); Mademlis, Georgios, SE-405 31 Göteborg (SE); Torstensson, Per, SE-405 31 Göteborg (SE)
(74) Representative: Nederlandsch Octrooibureau

(57) **Abstract**

A system can comprise a first set of energy storage systems, the first set of energy storage systems comprising a first cell chemistry. The system can further comprise at least a second set of energy storage systems, the at least a second set of energy storage systems comprising a second cell chemistry that can be different from the first cell chemistry. The system can further comprise a power electronic converter that can connect the first set of energy storage systems and the at least a second set of energy storage systems and that can act as a traction inverter to convert a direct current (DC) supply from the first set of energy storage systems and the at least a second set of energy storage systems to an alternating current (AC) supply to drive a motor of the electric drive unit.

## Description

### TECHNICAL FIELD

The subject disclosure relates to electric vehicle technology and, more specifically, to hybrid cell chemistries that can be employed in electric drives to generate electrical energy.

### BACKGROUND

Electric drives are commonly used in electric vehicles, industrial machines, and appliances. Electric drives convert electrical energy from a power supply system or batteries into mechanical energy that can be used to generate motion. Most batteries generally comprise a single type of cell chemistry and cannot be optimized for different parameters such as for improving performance and/or efficiency of electric vehicles.

The above-described background is merely intended to provide a contextual overview of electric drives and cell chemistries and is not intended to be exhaustive.

### SUMMARY

The following presents a summary to provide a basic understanding of one or more embodiments described herein. This summary is not intended to identify key or critical elements, delineate scope of particular embodiments or scope of claims. Its sole purpose is to present concepts in a simplified form as a prelude to the more detailed description that is presented later. In one or more embodiments described herein, systems, methods and/or devices that enable electric drives with hybrid cell chemistries are discussed.

According to an embodiment, a system is provided. The system can comprise a first set of energy storage systems, the first set of energy storage systems comprising a first cell chemistry that can be directed to energy density of an electric drive unit. The system can further comprise at least a second set of energy storage systems, the at least a second set of energy storage systems comprising a second cell chemistry that can be different from the first cell chemistry and that can be directed to power density of the electric drive unit. The system can further comprise a power electronic converter that can connect the first set of energy storage systems and the at least a second set of energy storage systems and that can act as a traction inverter to convert a direct current (DC) supply from the first set of energy storage systems and the at least a second set of energy storage systems to an alternating current (AC) supply to drive a motor of the electric drive unit.

According to another embodiment, a method is provided. The method can comprise connecting, via a power electronic converter of an electric drive unit, a first set of energy storage systems comprising a first cell chemistry directed to energy density of the electric drive unit and at least a second set of energy storage systems, the at least a second set of energy storage systems comprising a second cell chemistry that can be different from the first cell chemistry and that can be directed to power density of the electric drive unit, wherein the power electronic converter can act as a traction inverter to convert a DC supply from the first set of energy storage systems and the at least a second set of energy storage systems to an AC supply to drive a motor of the electric drive unit.

According to yet another embodiment, a system is provided. The system can comprise a first set of energy storage systems, the first set of energy storage systems comprising a first cell chemistry that can be directed to energy density of an electric vehicle. The electric vehicle can further comprise at least a second set of energy storage systems, the at least a second set of energy storage systems comprising a second cell chemistry that can be different from the first cell chemistry and that can be directed to power density of the electric vehicle. The electric vehicle can further comprise two or more power electronic converters that can act as respective traction inverters to convert a DC supply from the first set of energy storage systems and the at least a second set of energy storage systems to an AC supply to drive a motor of the electric vehicle, where the first set of energy storage systems and the at least a second set of energy storage systems can be connected via the two or more power electronic converters.

### BRIEF DESCRIPTION OF THE DRAWINGS

One or more embodiments are described below in the Detailed Description section with reference to the following drawings:
FIG. 1 illustrates a block diagram of an example, non-limiting system that can employ multiple different cell chemistries to generate electrical energy in an electric drive in accordance with one or more embodiments described herein.
FIG. 2 illustrates a schematic of an example, non-limiting topology of energy storage systems with different cell chemistries connected to an electric drive comprising an open end winding electric machine and two inverters in accordance with one or more embodiments described herein.
FIG. 3 illustrates another schematic of an example, non-limiting topology of energy storage systems with different cell chemistries connected to an electric drive comprising an open end winding electric machine and two inverters in accordance with one or more embodiments described herein.
FIG. 4 illustrates a schematic of an example, non-limiting topology of energy storage systems with different cell chemistries connected to an electric drive comprising a neutral point clamped (NPC) inverter and an electric machine in accordance with one or more embodiments described herein.
FIG. 5 illustrates a schematic of an example, non-limiting topology of energy storage systems with different cell chemistries connected to an electric drive comprising cascaded H-bridge (CHB) converters and an electric machine in accordance with one or more embodiments described herein.
FIG. 6 illustrates a flow diagram of an example, non-limiting method that can employ at least two different cell chemistries to generate electrical energy in an electric drive in accordance with one or more embodiments described herein.
FIG. 7 illustrates another flow diagram of an example, non-limiting method that can employ at least two different cell chemistries to generate electrical energy in an electric drive in accordance with one or more embodiments described herein.
FIG. 8 depicts an example schematic block diagram of a computing environment with which the disclosed subject matter can interact at least in part, in accordance with various aspects and implementations of the subject disclosure.
FIG. 9 is a block diagram representing an example computing environment into which aspects of the subject matter described herein may be incorporated.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

### DEFINITIONS:

Two level inverters: The main function of an inverter is to convert DC into AC. A two-level inverter produces an AC output voltage that can take on two possible levels (usually the positive and negative of the DC supply voltage), creating a stepped approximation of a sinusoidal waveform.

Multi-level inverters: A multi-level inverter is an advanced type of power electronic inverter that is designed to overcome some of the limitations of traditional two-level inverters, particularly in terms of harmonic distortion and voltage stress across the switching devices. Multi-level inverters generate an output voltage waveform that can take on more than two levels, typically achieving a closer approximation to a sinusoidal waveform. This capability allows reduced harmonic distortion, lower electromagnetic interference (EMI), and the ability to operate at higher voltages with lower switching losses.

DC Bus capacitor: The DC bus capacitor acts to smooth out voltage fluctuations on the DC bus, providing a stable voltage supply to an inverter. This is crucial during dynamic load conditions, such as acceleration and deceleration, where the demand on the power source changes rapidly.

Electric Machine: Electric machines in electric vehicles play a crucial role in converting electrical energy into mechanical energy to drive the vehicle. These machines are electric motors that can also act as generators during regenerative braking, capturing kinetic energy and converting it back to electrical energy to recharge the battery.

Electric drives comprise electric motors or electric machines and convert electrical energy from a power supply system or batteries into mechanical energy that can be used to generate motion. Electric drives are commonly used in electric vehicles, industrial machines, and appliances. An electric drive is typically connected to one or more batteries on an electrical vehicle network. Special contactors or special DC-DC converters are employed to interconnect the batteries and to supply power from the batteries to the electric drive. Electric drives also employ a power electronics controller that can manage the flow of electrical energy delivered by the DC source and control speed and torque of a motor. Thus, multiple hardware components are employed in electric drives to interconnect different batteries, step down the DC voltage and control the amount of electrical energy delivered to the motor. Additionally, electric drives usually derive power from a single type of cell chemistry and cannot be optimized for different parameters.

Embodiments described herein include systems, methods and devices that can comprise energy storage systems with different respective cell chemistries that can be employed to generated electrical energy to drive a motor of an electric drive unit (or electric drive). The different respective cell chemistries can mainly be utilized via a traction inverter, but the traction inverter can also control the motor. For example, the different energy storage systems can be interconnected via a power electronic converter that can also act as a traction inverter to convert a DC supply from the energy storage systems to an AC supply to drive the motor and control the motor without needing additional components. More specifically, the embodiments described herein pertain to an electric drive design that can incorporate at least two distinct cell chemistries inside two respective electrically isolated energy storage systems. Such electric drives can be employed inside electric vehicles to enhance overall performance, drivability and efficiency of the electric vehicles. For example, an electric drive unit can comprise two or more energy storage systems utilizing different respective cell chemistries that can be directed to specific driving conditions. Further, the two or more energy storage systems can be electrically isolated from one another to ensure independent management of the two or more energy storage systems for optimal operation. A power electronic converter can also be employed to connect the two or more energy storage systems (while maintaining the electrical isolation among the two or more energy storage systems) in the electric vehicle. The power electronic converter can have the additional functionality of acting as a power electronic inverter or traction inverter for the electric vehicle. Such electric drives can also be employed in industrial machines or other electromechanical systems. As discussed *supra,* an electric drive is typically connected to one or more batteries on an electrical vehicle network, and special contactors or special DC-DC converters are employed to interconnect the batteries and to supply power from the batteries to the electric drive. Embodiments of the present disclosure provide an electric drive comprising more than one type of power source input (e.g., batteries or other types of energy storage systems with different cell chemistries), and the electric drive wherein multiple power source inputs can be directly interconnected without employing any extra electronic components between the power source inputs.

In general, the electric drive unit can employ multiple energy storage systems with different respective characteristics, behaviors and chemistries that can allow the electric drive unit to be optimized for different parameters. For example, a first cell chemistry can be more suitable to generate a higher energy density in the electric drive unit, a second cell chemistry can be more suitable to generate a higher power density in the electric drive unit, and so on. In electric vehicles, the higher energy density can result in a greater range for the electric vehicle, the higher power density can result in better performance for the vehicle, and so on. Thus, the electric drive unit can be employed to optimize various parameters for a larger system. In various embodiments, the different cell chemistries can also result in different respective charging and load profiles for the energy storage systems. In this regard, the energy storage systems can be optimized for faster charging, higher lifetimes, etc. In various embodiments, the different chemistries can be selected from a Nickel Manganese Cobalt (NMC) chemistry, a Lithium Iron Phosphate (LFP) chemistry, a Lithium Cobalt Oxide (LCO) chemistry, or another type of cell chemistry. The energy storage systems can be batteries, fuel cells, supercapacitors or other types of energy storage systems. As discussed *supra,* the power electronic converter can connect the different energy storage systems and act as a traction inverter, and the power electronic converter can have different topologies. For example, the power electronic converter can have a two-level or multi-level inverter topology that can be combined with an open end winding machine, the traction inverter can be an NPC inverter, etc. In various embodiments, power electronics inside the power electronic converters can select different energy storage systems to drive the motor. For example, the power electronics inside the power electronic converter can select different energy storage systems to drive the motor at different instants or operating periods of the electric drive unit based on the parameter to be enhanced.

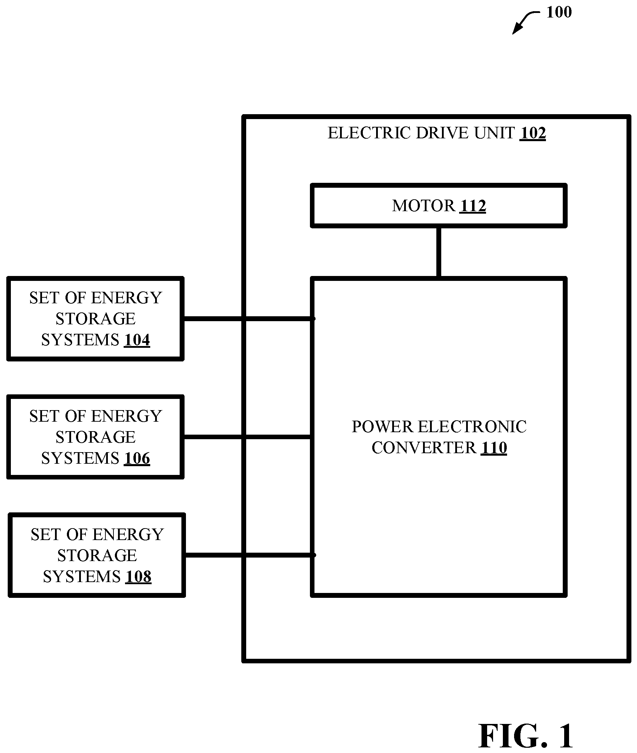

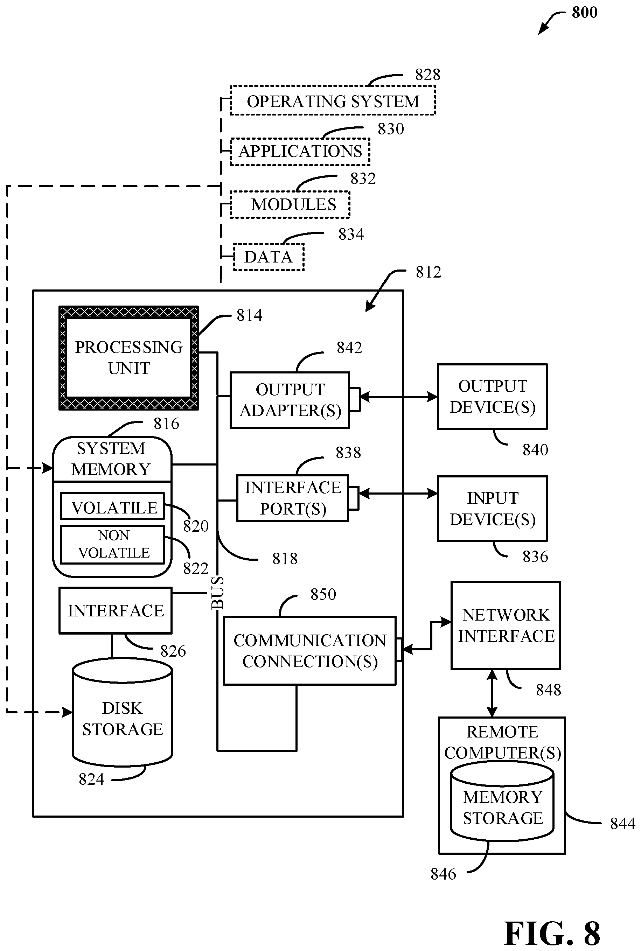

The embodiments depicted in one or more figures described herein are for illustration only, and as such, the architecture of embodiments is not limited to the systems, devices and/or components depicted therein, nor to any particular order, connection and/or coupling of systems, devices and/or components depicted therein. For example, in one or more embodiments, the non-limiting systems described herein, such as non-limiting system 100 as illustrated at FIG. 1, and/or systems thereof, can further comprise, be associated with, interact with and/or be coupled to one or more computer and/or computing-based elements described herein with reference to an operating environment, such as the operating environment 800 illustrated at FIG. 8. In one or more described embodiments, computer and/or computing-based elements can be used in connection with implementing one or more of the computer-implemented operations shown and/or described in connection with FIG. 1 and/or with other figures described herein.

FIG. 1 illustrates a block diagram of an example, non-limiting system 100 that can employ multiple different cell chemistries to generate electrical energy in an electric drive in accordance with one or more embodiments described herein.

Non-limiting system 100 can be employed to solve problems that are highly technical in nature (e.g., related to electric vehicles, electric drives, hybrid cell chemistries, etc.), that are not abstract and that cannot be performed as a set of mental acts by a human. Further, some of the processes performed by non-limiting system 100 may be performed to carry out defined tasks related to employing hybrid cell chemistries to generate electrical energy via an electric drive. Non-limiting system 100 can be employed to solve new problems that arise through advancements in technologies mentioned above and/or the like. Non-limiting system 100 can provide technical improvements to electric drives by increasing performance efficiency of electric drives, reducing the number of components employed by electric drives, and employing multiple cell chemistries directed to different performance parameters of electric drives. By employing such electric drives in electric vehicles, non-limiting system 100 can provide additional improvements by allowing a flexible system design for electric vehicles, such that an electric vehicle can incorporate multiple smaller batteries with various cell chemistries, as opposed to a single large battery with a single cell chemistry. Such embodiments can provide advantages in terms of physical space restrictions in an electric vehicle as well as in terms of enhancing different performance parameters of the electric vehicle by controlling the energy storage systems via a control software.

In various embodiments, non-limiting system 100 can comprise set of energy storage systems 104 (e.g., a first set of energy storage systems). In various embodiments, set of energy storage systems 104 can comprise one or more energy storage systems and each energy storage system can comprise a plurality of cells containing a first cell chemistry. That is, individual cells in each energy storage system of set of energy storage systems 104 can contain only a first type of cell chemistry. It is to be appreciated that individual cells comprised in a single energy storage system of non-limiting system 100 can comprise the same cell chemistry because employing cells with different chemistries in a single energy storage system can cause the different chemistries to react with one another, which can be undesirable. In some embodiments, individual energy storage systems of the set of energy storage systems 104 can be batteries/battery packs. In other embodiments, the individual energy storage systems can be fuel cells, supercapacitors or other types of energy storage systems now known or to be developed in the future. In various embodiments, the first cell chemistry can be an NMC chemistry, an LFP chemistry, an LCO chemistry, or another type of cell chemistry. In some embodiments, the first cell chemistry can be selected such that the first cell chemistry can be directed to energy density of electric drive unit 102.

In various embodiments, non-limiting system 100 can further comprise set of energy storage systems 106. In various embodiments, set of energy storage systems 106 (e.g., a first set of energy storage systems) can comprise one or more energy storage systems and each energy storage system can comprise a plurality of cells containing a second cell chemistry that can be different from the first cell chemistry. That is, individual cells in each energy storage system of set of energy storage systems 106 can contain only a second type of cell chemistry. In some embodiments, individual energy storage systems of the set of energy storage systems 106 can be batteries/battery packs. In other embodiments, the individual energy storage systems can be fuel cells, supercapacitors or other types of energy storage systems now known or to be developed in the future. In various embodiments, the second cell chemistry can be an NMC chemistry, an LFP chemistry, an LCO chemistry, or another type of cell chemistry. In some embodiments, the second cell chemistry can be selected such that the second cell chemistry can be directed to power density of electric drive unit 102.

In various embodiments, respective energy storage systems of set of energy storage systems 104 can have a first type of packaging and respective energy storage systems of set of energy storage systems 106 can have a second type of packaging that is different from the first type of packaging. Such embodiments of the present disclosure can provide an efficient packaging solution for a system with a hybrid cell chemistry by allowing two or more different energy storage systems to have different respective packaging sizes and forms. Further, in various embodiments, respective energy storage systems of set of energy storage systems 104 and set of energy storage systems 106 can have different voltage levels and different lifespans. The respective energy storage systems of set of energy storage systems 104 and set of energy storage systems 106 can also be charged at different respective charging speeds and discharged at different respective discharging speeds owing to the first and second cell chemistries. In various embodiments, the first cell chemistry can generate a first charging profile and a first load profile, and the second cell chemistry can generate a second charging profile and a second load profile. The second charging profile can be different from the first charging profile, and the second load profile can be different from the first load profile. A load profile can refer to a discharging profile because discharging an energy storage system can put a load on the energy storage system. In general, set of energy storage systems 104 and set of energy storage systems 106 can have different respective designs/forms and characteristics. Accordingly, set of energy storage systems 104 and set of energy storage systems 106 can be respectively directed to different performance parameters of electric drive unit 102.

Embodiments of the present disclosure where the respective energy storage systems of non-limiting system 100 can be chargeable at different respective charging speeds can provide a fast DC charging capability to non-limiting system 100 such that one energy storage system (e.g., of set of energy storage systems 104 and set of energy storage systems 106) can be charged faster than another energy storage system (e.g., of set of energy storage systems 104 and set of energy storage systems 106). Such capabilities can be beneficial in scenarios where the charging time is limited. Embodiments of the present disclosure where the respective energy storage systems of non-limiting system 100 can have different voltage levels/asymmetric voltage levels can make non-limiting system 100 more suitable for a high voltage system design. In such embodiments, different energy storage systems can have different voltage levels depending on the open-circuit voltage (OCV) of energy storage systems with the same number of cells. The OCV of an energy storage system can be defined as the voltage of the energy storage system when the energy storage system is not connected to any load.

In some embodiments, non-limiting system 100 can be employed in an electric vehicle, wherein the first cell chemistry can be directed to the energy density of electric drive unit 102 to increase a range of the electric vehicle and the second cell chemistry can be directed to the power density of electric drive unit 102 to improve performance of the electric vehicle. For example, set of energy storage systems 104 can comprise high energy density cells that can be designed (via the first cell chemistry) for long-range driving, and such cells can prioritize energy density, for example, over other parameters, to extend the overall range of the electric vehicle. Such cells can be ideal for highway or continuous driving scenarios. Similarly, set of energy storage systems 106 can comprise high power density cells that can be tailored (via the second cell chemistry) for situations demanding quick acceleration and deceleration, and such cells can offer an enhanced power output. Such cells can be ideal for stop-and-go city driving conditions, for motorways and/or to perform a quick acceleration or regeneration of the electric vehicle. In general, the multiple cell chemistry approach can maximize the range of the electric vehicle by utilizing the strengths of each type of cell chemistry. Additionally, in various embodiments, a combination of set of energy storage systems 104 and set of energy storage systems 106 can implement redundancy in non-limiting system 100. For example, the combination of set of energy storage systems 104 and set of energy storage systems 106 can prevent a loss of propulsion in the electric vehicle due to loss of one type of energy storage system. For example, in case of a fault in one energy storage system or loss of one battery pack due to a fault in one cell, non-limiting system 100 can continue to generate energy to propel the electric vehicle. Further, the combination of different cell chemistries can allow multiple smaller battery packs to be employed in electric vehicles that cannot employ large batteries due to physical space restrictions.

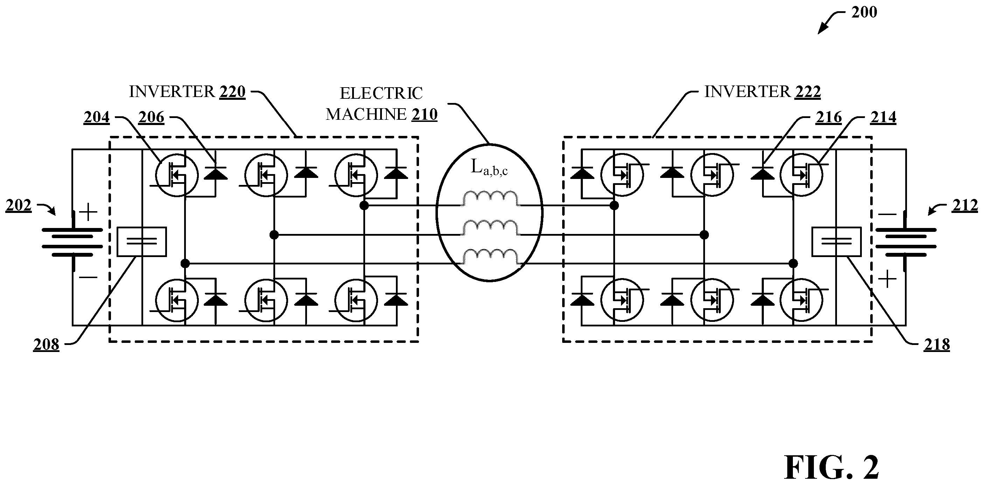

In various embodiments, set of energy storage systems 104 and set of energy storage systems 106 can be connected via power electronic converter 110. However, individual energy storage systems of set of energy storage systems 104 and set of energy storage systems 106 can remain electrically isolated from one another. Such electrical isolation can ensure independent management of the individual energy storage systems of set of energy storage systems 104 and set of energy storage systems 106 to control respective amounts of power drawn from the individual energy storage systems of set of energy storage systems 104 and set of energy storage systems 106. In various embodiments, the independent management can be performed via a non-illustrated control system of power electronic converter 110. Stated differently, the independent management of how power can be drawn from each energy storage system of non-limiting system 100 can be regulated through the control system of an inverter (i.e., power electronic converter 110) that can interconnect respective energy storage systems of non-limiting system 100. Such electrical isolation can also prevent current from rotating in non-limiting system 100, which current can be, for example, a common mode current related to an open end winding configuration that can rotate in non-limiting system 100 or circulating current flowing between cells of an MMC converter. Thus, individual energy storage systems of non-limiting system 100 can be interconnected via power electronic converter 110 while remaining electronically isolated from one another. One example of electrical isolation of energy storage systems is illustrated in FIG. 2, which shows an open end winding electric machine connected to two different inverters, with each inverter connected to an energy storage system having a different cell chemistry than that of the other. With reference to FIG. 2, in case of any failure in one inverter, non-limiting system 100 can continue to operate via the other inverter. Thus, the electrical isolation of individual energy storage systems can have multiple benefits.

In various embodiments, motor 112 can be an electric motor (or electric machine). In various embodiments, power electronic converter 110 can select set of energy storage systems 104 or set of energy storage systems 106 to generate electrical energy to drive motor 112. For example, power electronic converter 110 can be controlled via a software to select set of energy storage systems 104 or set of energy storage systems 106 to generate the electrical energy to drive motor 112. In one or more embodiments, each energy storage system of non-limiting system 100 can be individually controlled via a software. Further, the amount of energy extracted from each energy storage system can also be controlled. For example, in embodiments where non-limiting system 100 can be employed in an electric vehicle, an entity (e.g., hardware, software, AI, neural network, machine and/or user) operating the electric vehicle can select in the driving profile, the specific battery or batteries to engage at any instant during driving depending on the end goal. For example, a battery directed to energy density can be selected to increase the range of the electric vehicle, and after some time, a battery directed to power density can be selected to increase the performance of the electric vehicle, for example, in terms of acceleration or other performance parameters.

In various embodiments, power electronic converter 110 can act as a traction inverter to convert a DC supply from set of energy storage systems 104 and set of energy storage systems 106 to an AC supply to drive motor 112. That is, power electronic converter 110 can employ different energy sources of non-limiting system 100 to drive motor 112 and simultaneously control motor 112 (e.g., by managing the flow of electrical energy and controlling the speed and torque generated by motor 112), instead of only controlling motor 112. Additionally, power electronic converter 110 can be employed by itself, without employing additional components. This can be achieved by employing a multi-level converter as power electronic converter 110. In this regard, power electronic converter 110 can be a converter and a DC to AC inverter with more than one energy source. Due to the unique charging and load profiles of set of energy storage systems 104 and set of energy storage systems 106, interconnecting set of energy storage systems 104 and set of energy storage systems 106 can be challenging. However, as discussed *supra,* power electronic converter 110 can also interconnect set of energy storage systems 104 and set of energy storage systems 106. Depending on motor 112, in some embodiments, non-limiting system 100 can comprise two or more power electronic converters with separate energy sources, as explained next. Accordingly, in some of the embodiments discussed herein, power electronic converter 110 illustrated in FIG. 1 can represent two or more inverters coupled to respective energy sources.

As stated above, in various embodiments, power electronic converter 110 can have a two-level topology or a multi-level topology with *n* levels, where *n* ≥ 3, and the multi-level topology can be selected based on the type of motor 112 employed by non-limiting system 100. For example, power electronic converter 110 can be a flying capacitor inverter, an NPC inverter an active neutral point clamped (ANPC) inverter, a T type-NPC inverter, an MMC inverter, a CHB inverter, a multi-source inverter, or another type of suitable inverter. In some embodiments, motor 112 can be an open end winding electric machine coupled to two inverters connected to each end of the windings of motor 112, and power electronic converter 110 can be representative of the two inverters. In this regard, electric drive unit 102 can represent the combination of power electronic converter 110 and motor 112. Some of the topologies listed herein are explained in greater detail *infra* with reference to the subsequent figures. In various embodiments, power electronic converter 110 can only have one type of topology (e.g., NPC, T type - NPC, ANPC, MMC, CHB or another type of topology). However, a single motor such as motor 112 can be compatible with different types of inverter topologies. In various embodiments, multiple electric drive units 102 with different respective topologies for power electronic converter 110 can be combined in a larger system. For example, an electric vehicle can have a motor coupled to an NPC inverter at the front of the electric vehicle and a motor coupled to a CHB converter at the back of the electric vehicle. In general, an electric drive of the electric vehicle can comprise only one type of inverter topology, and the electric vehicle can comprise additional electric drives with different inverter topologies. Thus, different inverter topologies can be combined in a single system such as, for example, an electric vehicle.

In an embodiment, non-limiting system 100 can additionally comprise set of energy storage systems 108. Set of energy storage systems 108 can comprise one or more energy storage systems that can be connected to one another, to set of energy storage systems 104 and to set of energy storage systems 106 via power electronic converter 110, and individual energy storage systems of the set of energy storage systems 108 can remain electrically isolated from one another, from set of energy storage systems 104 and from set of energy storage systems 106. In various embodiments, the one or more additional energy storage systems can respectively comprise one or more cell chemistries that can be different from one another, from the first cell chemistry and from the second cell chemistry. In various embodiments, the one or more cell chemistries can be selected from a group consisting of an NMC chemistry, an LFP chemistry, an LCO, or another type of cell chemistry. Further, the one or more cell chemistries can be respectively directed to different performance parameters of electric drive unit 102. For example, the one or more cell chemistries can be optimized for specific driving conditions of an electric vehicle. It is to be appreciated that in addition to electric vehicles, non-limiting system 100 can also be employed in industrial machines or other electromechanical systems.

In some embodiments, individual energy storage systems of the set of energy storage systems 108 can be batteries/battery packs. In other embodiments, the individual energy storage systems can be fuel cells, supercapacitors or other types of energy storage systems now known or to be developed in the future. In various embodiments, respective energy storage systems of set of energy storage systems 108 can have different respective types of packaging. Such embodiments of the present disclosure can provide an efficient packaging solution for a system with a hybrid cell chemistry, by allowing two or more different energy storage systems to have different respective packaging sizes and forms. Further, in various embodiments, respective energy storage systems of set of energy storage systems 108 can have different voltage levels, different lifespans and are chargeable and dischargeable at different speeds. In general, respective energy storage systems of set of energy storage systems 108 can have different respective designs/forms and characteristics. A hybrid cell chemistry can provide for cell chemistry availability in non-limiting system 100 such that in case of shortage of one type of energy storage system, the energy storage system can be replaced by another type of energy storage system.

FIG. 2 illustrates a schematic of an example, non-limiting topology 200 of energy storage systems with different cell chemistries connected to an electric drive comprising an open end winding electric machine and two inverters in accordance with one or more embodiments described herein. Repetitive description of like elements and/or processes employed in respective embodiments is omitted for sake of brevity.

As discussed with reference to FIG. 1, in various embodiments, electric drive unit 102 can comprise power electronic converter 110 and motor 112 (or electric machine). In various embodiments, power electronic converter 110 can act as a traction inverter to convert a DC supply from set of energy storage systems 104 and set of energy storage systems 106 to an AC supply to drive motor 112. That is, power electronic converter 110 can employ different energy sources from different energy storage systems of non-limiting system 100 to drive motor 112 and simultaneously control motor 112, instead of only controlling motor 112. Additionally, power electronic converter 110 can be employed by itself, without needing to employ additional components. This can be achieved by employing a multi-level converter as power electronic converter 110. For example, power electronic converter 110 can have a two-level topology or a multi-level topology with *n* levels, where *n* ≥ 3, and the multi-level topology can be selected based on the type of motor 112 employed by non-limiting system 100. For example, power electronic converter 110 can be a flying capacitor inverter, an NPC inverter an ANPC inverter, a T type NPC inverter, an MMC, a CHB inverter, a multi-source inverter, or another type of suitable inverter.

In some embodiments, motor 112 can be an open end winding electric machine and power electronic converter 110 can represent two multi-level inverters connected to each end of the windings of motor 112. For example, electric machine 210 can be an open end winding electric machine connected to inverter 220 and inverter 222 illustrated inside the boxes with dashed lines. An open end winding electric machine is an electric machine where the windings are open and do not have a Y point, which is the neutral point for a three-phase electrical circuit. As such, electric machine 210 can be a three-phase electric machine, and electric machine 210 can connect to the three-phase output of inverter 220 on one side and the three-phase output of inverter 222 on another side. In FIG. 2, the windings corresponding to individual phases of electric machine 210 are illustrated by three rows of the scallop pattern, and the notation "L_{a,b,c}" can represent the three-phase inductance of electric machine 210. An open end winding electric machine such as electric machine 210 can only have two ends and therefore, can only be connected to two inverters. However, other topologies for power electronic converter 110 can have additional inverters. For example, other topologies for power electronic converters can comprise multiple converter modules (e.g., MMCs or CHB converters), where respective converter modules can be separate, complex inverter topologies comprising respective energy storage systems.

Energy storage system 202 having a first type of cell chemistry can be connected to the positive and negative poles or terminals of inverter 220 and energy storage system 212 having a second type of cell chemistry can be connected to the positive and negative poles or terminals of inverter 222. Energy storage system 202 can be electrically isolated from energy storage system 212. In various embodiments, the second type of cell chemistry can be different from the first type of cell chemistry. In various embodiments, the first type of cell chemistry and the second type of cell chemistry can be any one of NMC, LFP, LCO, or another type of cell chemistry. Inverter 220 can convert a DC supply from energy storage system 202 to an AC supply to drive electric machine 210, and inverter 222 can convert a DC supply from energy storage system 212 to an AC supply to drive electric machine 210. By combining energy storage systems with different cell chemistries with an open end winding electric machine, electric drive unit 102 can be optimized and made more efficient.

Inverter 220 can comprise DC bus capacitor 208. DC bus capacitor 208 can smooth out voltage fluctuations on a DC bus, providing a stable voltage supply to inverter 220, which can be crucial during dynamic load conditions, such as acceleration and deceleration, where the demand on the power source (e.g., energy storage system 202) can change rapidly. Inverter 220 can further comprise six switches 204 and diodes 206. Switches 204 can be transistors such as metal-oxide-semiconductor field-effect transistors (MOSFETs), insulated-gate bipolar transistors (IGBTs) or another type of transistor now known or to be developed in the future. Diodes 206 can be semiconductor diodes. Inverter 222 can have a similar layout with DC bus capacitor 218, switches 214 and diodes 216.

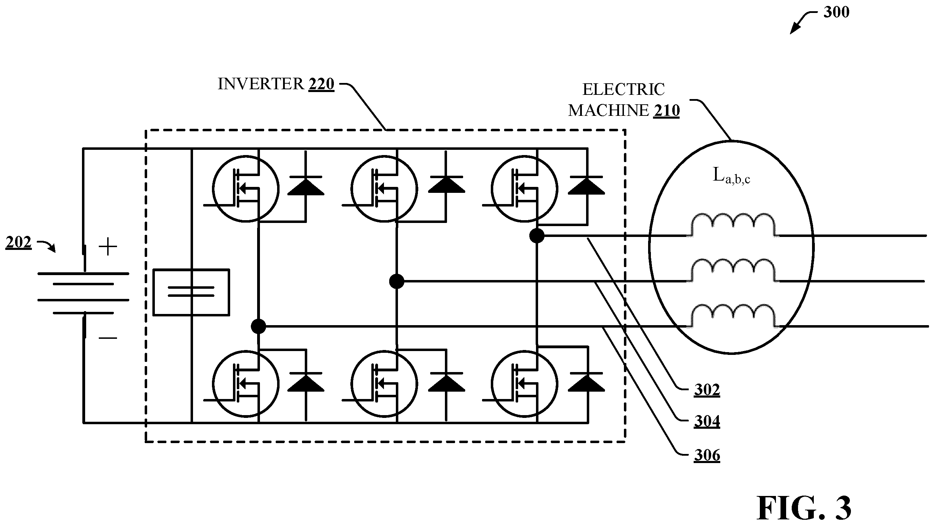

FIG. 3 illustrates a schematic of an example, non-limiting topology 300 of energy storage systems with different cell chemistries connected to an electric drive comprising an open end winding electric machine and two inverters in accordance with one or more embodiments described herein. Repetitive description of like elements and/or processes employed in respective embodiments is omitted for sake of brevity.

Non-limiting topology 300 illustrates the portion of non-limiting topology 200 with energy storage system 202, inverter 220 and electric machine 210. As stated *supra,* inverter 220 and inverter 222 can be multi-level inverters. For example, inverter 220 can have three levels with each level comprising two switches 204 and two diodes 206. Each level of inverter 220 can represent a phase of inverter 220 such that inverter 220 can generate a three-phase output, and electric machine 210 can connect to the three-phase output of inverter 220 on one side. The connections between individual phases of inverter 220 and electric machine 210 are illustrated by connection 302, connection 304 and connection 306. Electric machine 210 can connect to the three-phase output of inverter 222 on another side in a similar manner, and electric machine 210 can be driven by energy storage system 202 and energy storage system 212.

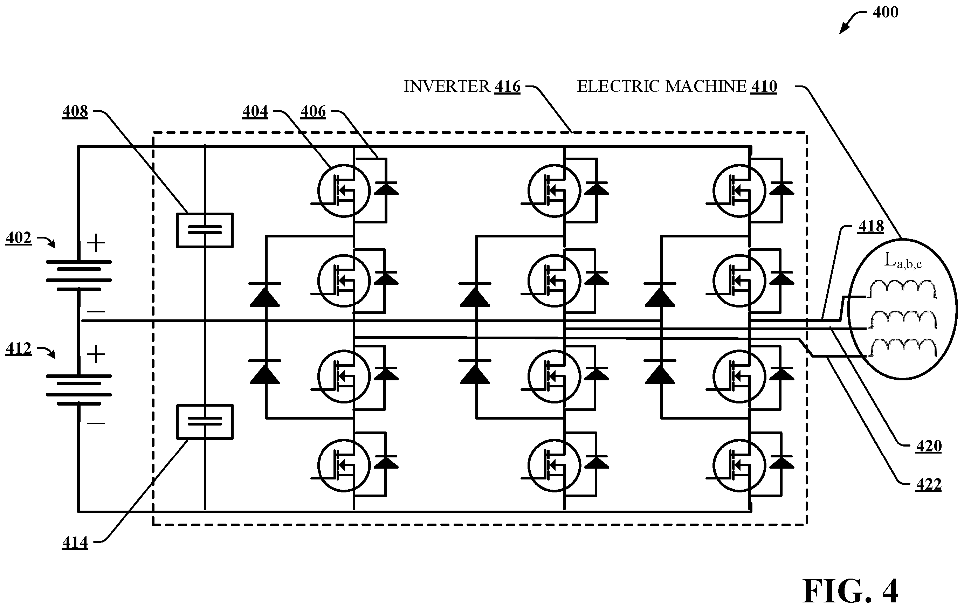

FIG. 4 illustrates a schematic of an example, non-limiting topology 400 of energy storage systems with different cell chemistries connected to an electric drive comprising an NPC inverter and an electric machine in accordance with one or more embodiments described herein. Repetitive description of like elements and/or processes employed in respective embodiments is omitted for sake of brevity.

As discussed with reference to FIG. 1, in various embodiments, electric drive unit 102 can comprise power electronic converter 110 and motor 112 (or electric machine). In various embodiments, power electronic converter 110 can act as a traction inverter to convert a DC supply from set of energy storage systems 104 and set of energy storage systems 106 to an AC supply to drive motor 112. That is, power electronic converter 110 can employ different energy sources from different energy storage systems of non-limiting system 100 to drive motor 112 and simultaneously control motor 112, instead of only controlling motor 112. Additionally, power electronic converter 110 can be employed by itself, without needing to employ additional components. This can be achieved by employing a multi-level converter as power electronic converter 110. For example, power electronic converter 110 can have a two-level topology or a multi-level topology with *n* levels, where *n* ≥ 3, and the multi-level topology can be selected based on the type of motor 112 employed by non-limiting system 100. For example, power electronic converter 110 can be a flying capacitor inverter, an NPC inverter an ANPC inverter, a T type NPC inverter, an MMC, a CHB inverter, a multi-source inverter, or another type of suitable inverter. In some embodiments, motor 112 can be an open end winding electric machine and power electronic converter 110 can represent two multi-level inverters connected to each end of the windings of motor 112.

In some embodiments, motor 112 can be an electric machine and power electronic converter 110 can be an NPC inverter coupled to motor 112. That is, electric machine 410 can be coupled to inverter 416, and inverter 416 can be an NPC inverter. Electric machine 410 can be a three-phase electric machine, and electric machine 410 can be connected to the three-phase output of inverter 416. In FIG. 4, the notation "L_{a,b,c}" can represent the three-phase inductance of electric machine 410. Inverter 416 can be further coupled to energy storage system 402 having a first type of cell chemistry and to energy storage system 412 having a second type of cell chemistry that is different from the first type of cell chemistry. Energy storage system 402 can be electrically isolated from energy storage system 412. Inverter 416 can comprise DC bus capacitor 408 and DC bus capacitor 414. A DC bus capacitor can smooth out voltage fluctuations on a DC bus, providing a stable voltage supply to an inverter, which can be crucial during dynamic load conditions, such as acceleration and deceleration, where the demand on the power source can change rapidly. Inverter 416 can further comprise switches 404 and diodes 406. Switches 404 can be transistors such as MOSFETs, IGBTs or another type of transistor now known or to be developed in the future. Diodes 406 can be semiconductor diodes. Inverter 416 can be a multi-level inverter with *n* levels, where *n* ≥ 3, and each level of inverter 416 can comprise four switches 404 and six diodes 406. For example, non-limiting topology 400 corresponds to a three-level topology, and inverter 416 is illustrated as a three-level inverter (n = 3) which can imply that inverter 416 can take two DC inputs, one from energy storage system 402 and another energy storage system 412. However, the NPC inverter topology can be expanded to more levels. For example, in one or more embodiments, inverter 416 can have additional levels (n > 3). For example, inverter 416 can have five levels, which can imply that inverter 416 can take four DC inputs having different respective cell chemistries. In general, an n-level NPC inverter can have (*n -* 1) DC inputs or, stated differently, an n-level NPC inverter can take (*n -* 1) batteries.

In various embodiments, inverter 416 can be controlled via a software to select the specific energy storage system to draw energy from to power electric machine 410. For example, a control software can be implemented in non-limiting system 100 such that an entity (e.g., hardware, software, AI, neural network, machine and/or user) can select, via another system directly or indirectly coupled to non-limiting system 100, energy storage system 402, energy storage system 412 and/or another energy storage system (e.g., in an n-level NPC inverter) to power electric machine 410. In some embodiments, the control software can also be configured to control the amount of energy to be drawn the specific energy storage systems selected by the entity. For example, energy storage system 402 can be controlled to deliver more power than energy storage system 412. This concept is not limited to the NPC inverter topology and can be applicable to other topologies for power electronic converter 110.

As discussed *supra,* inverter 416 can be a multi-level NPC inverter. For example, inverter 416 can have three levels with each level comprising four switches 204 and six diodes 206. Each level of inverter 416 can represent a phase of inverter 416 such that inverter 416 can generate a three-phase output via energy storage system 402 and energy storage system 412, and electric machine 410 can be connected to the three-phase output of inverter 416. The connections between inverter 416 and electric machine 410 are illustrated by connection 418, connection 420 and connection 422 in FIG. 4.

In some embodiments, power electronic converter 110 can be a flying capacitor inverter, an ANPC inverter, a T-type NPC inverter, a CHB inverter, a multi-source inverter, or an MMC inverter. For example, in some embodiments, motor 112 can be an electric machine and power electronic converter 110 can represent an MMC coupled to motor 112. The MMC can be further coupled to energy storage systems 402 and 412 with the different respective cell chemistries. For example, energy storage systems 402 and 412 can be coupled to an MMC board. The MMC board can comprise different power switches, electronics, etc., and the MMC can convert a DC supply from energy storage systems 402 and 412 to an AC supply that can power motor 112. In some embodiments, power electronic converter 110 can be an MMC coupled to one or more additional energy storage systems with different respective cell chemistries. For example, power electronic converter 110 can be coupled to an energy storage system comprising a third type of cell chemistry that can be different from the first type of cell chemistry and the second type of cell chemistry. In this regard the number of energy storage systems can be increased by any integer value.

By combining different cell chemistries with an MMC (or another type of inverter), the design of non-limiting system 100 can be made more flexible. Further, the individual energy storage systems can be electrically isolated from one another to prevent current from rotating in non-limiting system 100 and to ensure independent management of the individual energy storage systems to control respective amounts of power drawn from respective energy storage systems, wherein the independent management can be performed via a control system (not illustrated) of power electronic converter 110. For example, in various embodiments, a control system of the MMC can be controlled via a software to select the energy storage system to draw energy from to power motor 112. For example, a control software can be implemented in non-limiting system 100 such that an entity (e.g., hardware, software, AI, neural network, machine and/or user) can select, via another system directly or indirectly coupled to non-limiting system 100, energy storage system 402, energy storage system 412 and/or another energy storage system to power motor 112. The control software can also be configured to control the amount of energy to be drawn from the specific energy storage systems selected by the entity. For example, energy storage system 402 can be controlled to deliver more power than energy storage system 412.

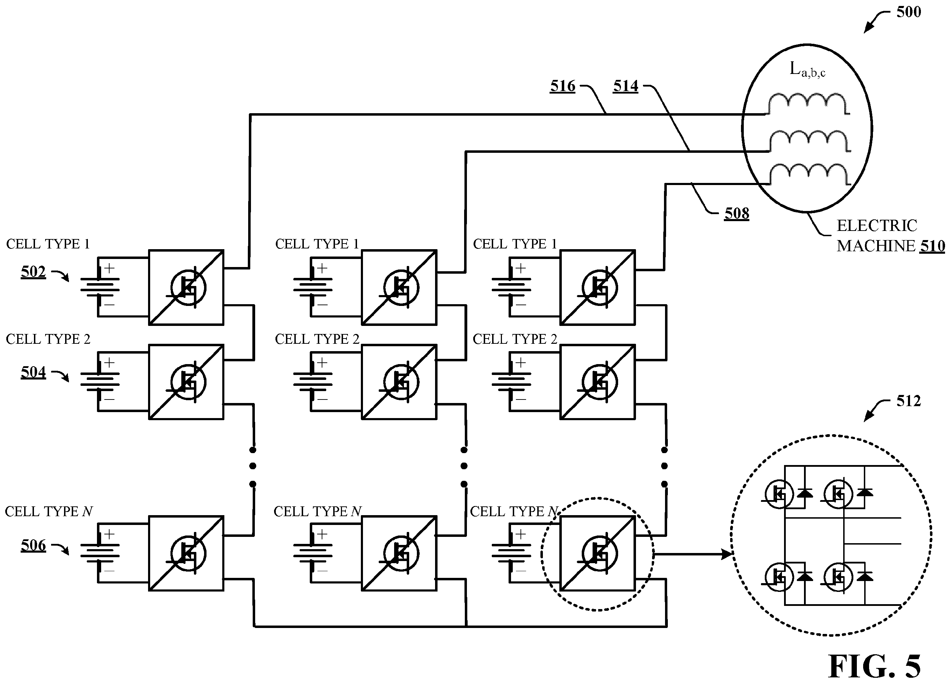

FIG. 5 illustrates a schematic of an example, non-limiting topology 500 of energy storage systems with different cell chemistries connected to an electric drive comprising CHB converters and an electric machine in accordance with one or more embodiments described herein. Repetitive description of like elements and/or processes employed in respective embodiments is omitted for sake of brevity.

As discussed with reference to FIG. 1, in various embodiments, electric drive unit 102 can comprise power electronic converter 110 and motor 112 (or electric machine). In various embodiments, power electronic converter 110 can act as a traction inverter to convert a DC supply from set of energy storage systems 104 and set of energy storage systems 106 to an AC supply to drive motor 112. That is, power electronic converter 110 can employ different energy sources from different energy storage systems of non-limiting system 100 to drive motor 112 and simultaneously control motor 112, instead of only controlling motor 112. Additionally, power electronic converter 110 can be employed by itself, without needing to employ additional components. This can be achieved by employing a multi-level converter as power electronic converter 110. For example, power electronic converter 110 can have a two-level topology or a multi-level topology with *n* levels, where *n* ≥ 3, and the multi-level topology can be selected based on the type of motor 112 employed by non-limiting system 100. For example, power electronic converter 110 can be a flying capacitor inverter, an NPC inverter an ANPC inverter, a T type NPC inverter, an MMC, a CHB inverter, a multi-source inverter, or another type of suitable inverter. In one or more embodiments, two or more power electronic converters (such as power electronic converter 110) can act as respective traction inverters to convert a DC supply from a first set of energy storage systems and a second set of energy storage systems to an AC supply to drive a motor of an electric vehicle. For example, in some embodiments, motor 112 can be an open end winding electric machine and power electronic converter 110 can represent two multi-level inverters connected to each end of the windings of motor 112.

In some embodiments, motor 112 can be an electric machine and power electronic converter 110 can represent a plurality of CHB converters coupled to motor 112 such that each phase of power electronic converter 110 can comprise two or more CHB converters. In some embodiments, electric machine 510 can be a three-phase electric machine that can be coupled to a three-phase output generated by power electronic converter 110. For example, connection 508 can illustrate a first phase of power electronic converter 110, connection 514 can illustrate a second phase of power electronic converter 110 and connection 516 can illustrate a third phase of power electronic converter 110. In other embodiments, the plurality of CHB converters can be distributed across more than three phases. Thus, the number of phases for a CHB-based topology for power electronic converter 110 is not limited to three.

Individual CHB converters of the plurality of CHB converters can be respectively coupled to energy storage systems with different respective cell chemistries. For example, energy storage system 502 can comprise a first type of cell chemistry (cell type 1) and energy storage system 504 can comprise a second type of cell chemistry (cell type 2) that can be different from the first type of cell chemistry. In various embodiments, power electronic converter 110 can comprise one or more additional energy storage systems such as energy storage system 506 (cell type *N*) comprising a third type of cell chemistry that can be different from the first and second types of cell chemistries. Energy storage system 502 can be coupled to a first CHB converter, energy storage system 504 can be coupled to a second CHB converter, energy storage system 506 can be coupled to a third CHB converter, and so on, and the pattern can be repeated across different phases of power electronic converter 110, as illustrated by non-limiting topology 500. Each CHB converter can convert a DC supply from respective energy storage systems to an AC supply that can power electric machine 510. In various embodiments, any combination of different cell chemistries can be implemented with the CHB converter. By combining different cell chemistries with CHB converters, the design of non-limiting system 100 can be made more flexible. Illustrated at 512 is a full bridge configuration of an individual CHB converter. Although, the full bridge configuration can be the most common configuration employed for a CHB converter, such individual modules (as illustrated at 512) can comprise any type of inverter.

In various embodiments, the plurality of CHB converters can be separately controlled via a software to select the specific energy storage system to draw energy from to power electric machine 510. For example, a control software can be implemented in non-limiting system 100 such that an entity (e.g., hardware, software, AI, neural network, machine and/or user) can select, via another system directly or indirectly coupled to non-limiting system 100, energy storage system 502, energy storage system 504, energy storage system 506, and/or another energy storage system to power electric machine 510. The control software can also be configured to control the amount of energy to be drawn from the specific energy storage systems selected by the entity. For example, the entity can select energy storage system 504 to deliver more power than energy storage system 502.

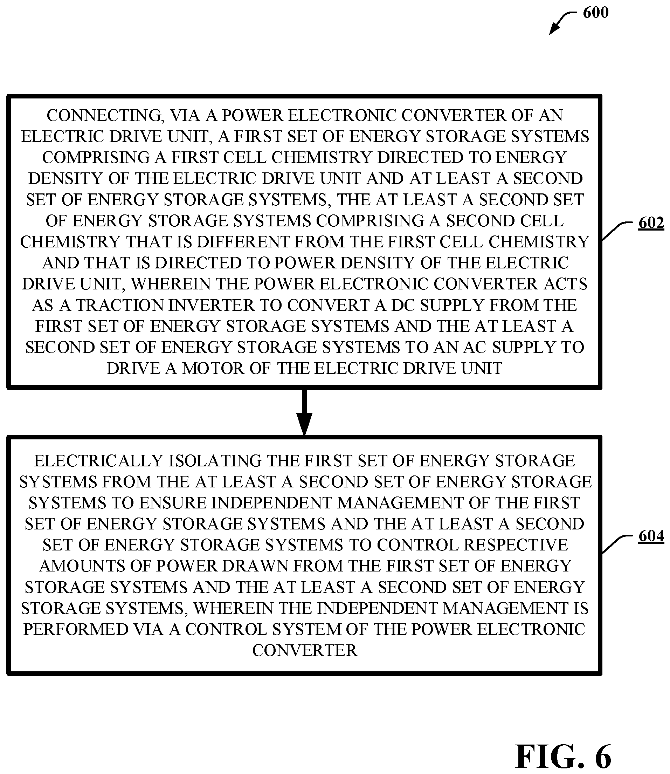

FIG. 6 illustrates a flow diagram of an example, non-limiting method 600 that can employ at least two different cell chemistries to generate electrical energy in an electric drive in accordance with one or more embodiments described herein. Repetitive description of like elements and/or processes employed in respective embodiments is omitted for sake of brevity.

At 602, non-limiting method 600 can comprise connecting, via a power electronic converter of an electric drive unit, a first set of energy storage systems comprising a first cell chemistry directed to energy density of the electric drive unit and at least a second set of energy storage systems, the at least a second set of energy storage systems comprising a second cell chemistry that can be different from the first cell chemistry and that can be directed to power density of the electric drive unit, wherein the power electronic converter can act as a traction inverter to convert a DC supply from the first set of energy storage systems and the at least a second set of energy storage systems to an AC supply to drive a motor of the electric drive unit.

At 604, non-limiting method 600 can comprise electrically isolating the first set of energy storage systems from the at least a second set of energy storage systems to ensure independent management of the first set of energy storage systems and the at least a second set of energy storage systems to control respective amounts of power drawn from the first set of energy storage systems and the at least a second set of energy storage systems, wherein the independent management is performed via a control system of the power electronic converter.

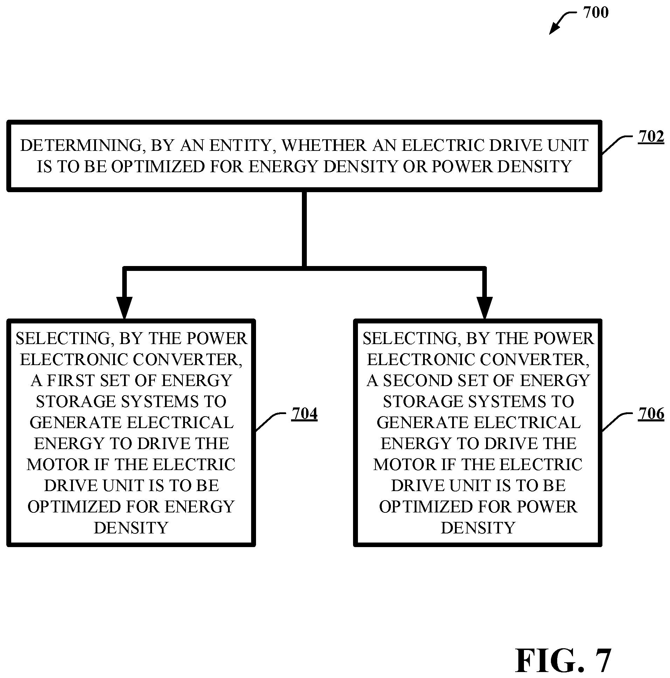

FIG. 7 illustrates a flow diagram of an example, non-limiting method 700 that can employ at least two different cell chemistries to generate electrical energy in an electric drive in accordance with one or more embodiments described herein. Repetitive description of like elements and/or processes employed in respective embodiments is omitted for sake of brevity.

Non-limiting method 700 can correspond to additional aspects of non-limiting system 100. It is to be appreciated that non-limiting system 100 and non-limiting method 700 are not limited by the aspects disclosed herein.

At 702, non-limiting method 700 can comprise determining, by an entity (e.g., hardware, software, AI, neural network, machine and/or user) whether an electric drive unit is to be optimized for energy density or power density. Based on the determination by the entity, a power electronic converter can select a first set of energy storage systems or a second set of energy storage systems to power the motor.

For example, at 704, non-limiting method 700 can comprise selecting, by the power electronic converter, a first set of energy storage systems to generate electrical energy to drive the motor if the electric drive unit is to be optimized for energy density. For example, the first set of energy storage systems can comprise a first cell chemistry that can be directed to energy density of the electric drive unit, and selecting the first set of energy storage systems to drive the motor can optimize the electric drive unit for energy density.

Likewise, at 706, non-limiting method 700 can comprise selecting, by the power electronic converter, a second set of energy storage systems to generate electrical energy to drive the motor if the electric drive unit is to be optimized for power density. For example, the second set of energy storage systems can comprise a second cell chemistry that can be directed to power density of the electric drive unit, and selecting the second set of energy storage systems to drive the motor can optimize the electric drive unit for power density.

For simplicity of explanation, the methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the methodologies in accordance with the described subject matter. Additionally, the computer-implemented methodologies described hereinafter and/or throughout this specification are capable of being stored on an article of manufacture to enable transporting and transferring the computer-implemented methodologies to computers. The term article of manufacture, as used herein, is intended to encompass a computer program accessible from any computer-readable device or storage media.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

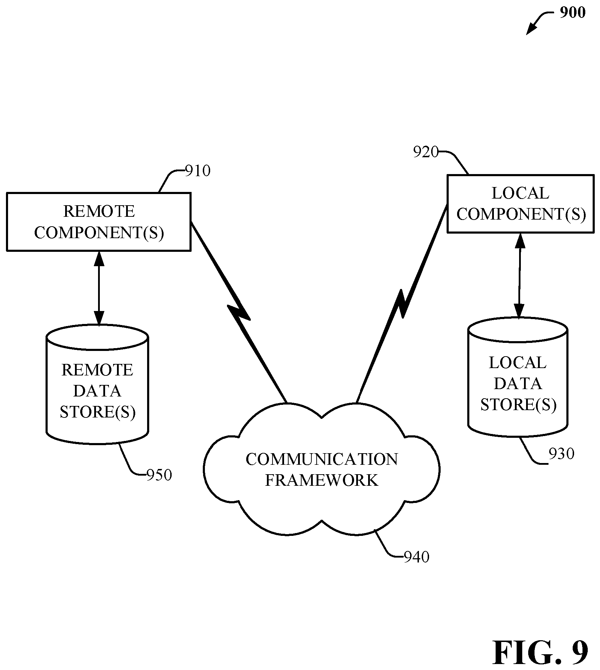

Turning next to FIGS. 8 and 9, a detailed description is provided of additional context for the one or more embodiments described herein with reference to FIGS. 1 - 9.

In order to provide a context for the various aspects of the disclosed subject matter, FIG. 8 as well as the following discussion are intended to provide a general description of a suitable environment in which the various aspects of the disclosed subject matter can be implemented. FIG. 8 illustrates a block diagram of an example, non-limiting operating environment in which one or more embodiments described herein can be facilitated. Repetitive description of like elements employed in other embodiments described herein is omitted for sake of brevity. With reference to FIG. 8, a suitable operating environment 800 for implementing various aspects of this disclosure can also include a computer 812. The computer 812 can also include a processing unit 814, a system memory 816, and a system bus 818. The system bus 818 couples system components including, but not limited to, the system memory 816 to the processing unit 814. The processing unit 814 can be any of various available processors. Dual microprocessors and other multiprocessor architectures also can be employed as the processing unit 814. The system bus 818 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1394), Small Computer Systems Interface (SCSI), a controller area network (CAN) bus, and a local interconnect network (LIN) bus. The system memory 816 can also include volatile memory 820 and nonvolatile memory 822. The basic input/output system (BIOS), containing the basic routines to transfer information between elements within the computer 812, such as during start-up, is stored in nonvolatile memory 822. By way of illustration, and not limitation, nonvolatile memory 822 can include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory 820 can also include random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 812 can also include removable/non-removable, volatile/non-volatile computer storage media. FIG. 8 illustrates, for example, a disk storage 824. Disk storage 824 can also include, but is not limited to, devices like a magnetic disk drive, floppy disk drive, tape drive, Jaz drive, Zip drive, LS-100 drive, flash memory card, or memory stick. The disk storage 824 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 824 to the system bus 818, a removable or non-removable interface is typically used, such as interface 826. FIG. 8 also depicts software that acts as an intermediary between users and the basic computer resources described in the suitable operating environment 800. Such software can also include, for example, an operating system 828. Operating system 828, which can be stored on disk storage 824, acts to control and allocate resources of the computer 812. System applications 830 take advantage of the management of resources by operating system 828 through program modules 832 and program data 834, e.g., stored either in system memory 816 or on disk storage 824. It is to be appreciated that this disclosure can be implemented with various operating systems or combinations of operating systems. A user enters commands or information into the computer 812 through input device(s) 836. Input devices 836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 814 through the system bus 818 via interface port(s) 838. Interface port(s) 838 include, for example, a serial port, a parallel port, a game port, and a universal serial bus (USB). Output device(s) 840 use some of the same type of ports as input device(s) 836. Thus, for example, a USB port can be used to provide input to computer 812, and to output information from computer 812 to an output device 840. Output adapter 842 is provided to illustrate that there are some output devices 840 like monitors, speakers, and printers, among other output devices 840, which require special adapters. The output adapters 842 include, by way of illustration and not limitation, video and sound cards that provide a means of connection between the output device 840 and the system bus 818. It should be noted that other devices and/or systems of devices provide both input and output capabilities such as remote computer(s) 844.

Computer 812 can operate in a networked environment using logical connections to one or more remote computers, such as remote computer(s) 844. The remote computer(s) 844 can be a computer, a server, a router, a network PC, a workstation, a microprocessor based appliance, a peer device or other common network node and the like, and typically can also include many or all of the elements described relative to computer 812. For purposes of brevity, only a memory storage device 846 is illustrated with remote computer(s) 844. Remote computer(s) 844 is logically connected to computer 812 through a network interface 848 and then physically connected via communication connection 850. Network interface 848 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 850 refers to the hardware/software employed to connect the network interface 848 to the system bus 818. While communication connection 850 is shown for illustrative clarity inside computer 812, it can also be external to computer 812. The hardware/software for connection to the network interface 848 can also include, for example purposes only, internal and external technologies such as, modems including regular telephone grade modems, cable modems and DSL modems, ISDN adapters, and Ethernet cards.

The illustrated embodiments described herein can be employed relative to distributed computing environments (e.g., cloud computing environments), such as described below with respect to FIG. 9, where certain tasks are performed by remote processing devices that are linked through a communications network. In a distributed computing environment, program modules can be located both in local and/or remote memory storage devices.

For example, one or more embodiments described herein and/or one or more components thereof can employ one or more computing resources of the cloud computing environment described below with reference to illustration 900 of FIG. 9. For instance, one or more embodiments described herein and/or components thereof can employ such one or more resources to execute one or more: mathematical function, calculation and/or equation; computing and/or processing script; algorithm; model (e.g., artificial intelligence (AI) model, machine learning (ML) model, deep learning (DL) model, and/or like model); and/or other operation in accordance with one or more embodiments described herein.

It is to be understood that although one or more embodiments described herein include a detailed description on cloud computing, implementation of the teachings recited herein are not limited to a cloud computing environment. Rather, one or more embodiments described herein are capable of being implemented in conjunction with any other type of computing environment now known or later developed. That is, the one or more embodiments described herein can be implemented in a local environment only, and/or a non-cloud-integrated distributed environment, for example.

A cloud computing environment can provide one or more of low coupling, modularity and/or semantic interoperability. At the heart of cloud computing is an infrastructure that includes a network of interconnected aspects.

Moreover, the non-limiting system 100 can be associated with and/or be included in cloud-based and/or partially-cloud-based system.

Referring now to details of one or more elements illustrated at FIG. 9, an illustrative cloud computing environment 900 is depicted. FIG. 9 is a schematic block diagram of a computing environment 900 with which the disclosed subject matter can interact. The system 900 comprises one or more remote component(s) 910. The remote component(s) 910 can be hardware and/or software (e.g., threads, processes, computing devices). In some embodiments, remote component(s) 910 can be a distributed computer system, connected to a local automatic scaling component and/or programs that use the resources of a distributed computer system, via communication framework 940. Communication framework 940 can comprise wired network devices, wireless network devices, mobile devices, wearable devices, radio access network devices, gateway devices, femtocell devices, servers, etc.

The system 900 also comprises one or more local component(s) 920. The local component(s) 920 can be hardware and/or software (e.g., threads, processes, computing devices). In some embodiments, local component(s) 920 can comprise an automatic scaling component and/or programs that communicate/use the remote resources 910 and 920, etc., connected to a remotely located distributed computing system via communication framework 940.

One possible communication between a remote component(s) 910 and a local component(s) 920 can be in the form of a data packet adapted to be transmitted between two or more computer processes. Another possible communication between a remote component(s) 910 and a local component(s) 920 can be in the form of circuit-switched data adapted to be transmitted between two or more computer processes in radio time slots. The system 900 comprises a communication framework 940 that can be employed to facilitate communications between the remote component(s) 910 and the local component(s) 920, and can comprise an air interface, e.g., Uu interface of a UMTS network, via a long-term evolution (LTE) network, etc. Remote component(s) 910 can be operably connected to one or more remote data store(s) 950, such as a hard drive, solid state drive, SIM card, device memory, etc., that can be employed to store information on the remote component(s) 910 side of communication framework 940. Similarly, local component(s) 920 can be operably connected to one or more local data store(s) 930, that can be employed to store information on the local component(s) 920 side of communication framework 940.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, is not to be construed as being transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein can be downloaded to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter has been described above in the general context of computer-executable instructions of a computer program product that runs on a computer and/or computers, those skilled in the art will recognize that the one or more embodiments herein also can be implemented in combination with one or more other program modules. Generally, program modules include routines, programs, components, data structures, and/or the like that perform particular tasks and/or implement particular abstract data types. Moreover, the aforedescribed computer-implemented methods can be practiced with other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like. The illustrated aspects can also be practiced in distributed computing environments in which tasks are performed by remote processing devices that are linked through a communications network. However, one or more, if not all aspects of the one or more embodiments described herein can be practiced on stand-alone computers. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter described herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A processor can be implemented as a combination of computing processing units.

Herein, terms such as "store," "storage," "data store," data storage," "database," and substantially any other information storage component relevant to operation and functionality of a component are utilized to refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can act as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein are intended to include, without being limited to including, these and/or any other suitable types of memory.

What has been described above includes mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes", "has", "possesses", and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments have been presented for purposes of illustration but are not intended to be exhaustive or limited to the embodiments described herein. Many modifications and variations will be apparent to those of ordinary skill in the art without departing from the scope and spirit of the described embodiments. The terminology used herein was chosen to best explain the principles of the embodiments, the practical application and/or technical improvement over technologies found in the marketplace, and/or to enable others of ordinary skill in the art to understand the embodiments described herein.

Further aspects of various embodiments described herein are provided by the subject matter of the following clauses:
Clause 1: A system, comprising: a first set of energy storage systems, the first set of energy storage systems comprising a first cell chemistry that is directed to energy density of an electric drive unit; at least a second set of energy storage systems, the at least a second set of energy storage systems comprising a second cell chemistry that is different from the first cell chemistry and that is directed to power density of the electric drive unit; and a power electronic converter that connects the first set of energy storage systems and the at least a second set of energy storage systems and that acts as a traction inverter to convert a DC supply from the first set of energy storage systems and the at least a second set of energy storage systems to an AC supply to drive a motor of the electric drive unit.
Clause 2: The system of any preceding clause, further comprising: one or more additional sets of energy storage systems that are connected to one another, the first set of energy storage systems and the at least a second set of energy storage systems via the power electronic converter, wherein the one or more additional sets of energy storage systems respectively comprise one or more cell chemistries that are different from one another, the first cell chemistry and the second cell chemistry, and wherein the one or more cell chemistries are respectively directed to different performance parameters of the electric drive unit.
Clause 3: The system of any preceding clause, wherein the first set of energy storage systems is electrically isolated from the at least a second set of energy storage systems to prevent current from rotating in the system and to ensure independent management of the first set of energy storage systems and the at least a second set of energy storage systems to control respective amounts of power drawn from the first set of energy storage systems and the at least a second set of energy storage systems, and wherein the independent management is performed via a control system of the power electronic converter.
Clause 4: The system of any preceding clause, wherein the power electronic converter has a multi-level topology that is selected based on the motor employed by the system.
Clause 5: The system of any preceding clause, wherein respective energy storage systems of the first set of energy storage systems and the at least a second set of energy storage systems comprise a plurality of cells.
Clause 6: The system of any preceding clause, wherein respective energy storage systems of the first set of energy storage systems have a first type of packaging and respective energy storage systems of the at least a second set of energy storage systems have a second type of packaging that is different from the first type of packaging.
Clause 7: The system of any preceding clause, wherein respective energy storage systems of the first set of energy storage systems and the at least a second set of energy storage systems have different voltage levels, different lifespans and are chargeable at different respective charging speeds.
Clause 8: The system of any preceding clause, wherein the first set of energy storage systems and the at least a second set of energy storage systems are batteries or electrical energy storage systems different from batteries.
Clause 9: The system of any preceding clause, wherein the first cell chemistry generates a first charging profile and a first load profile, and wherein the electric drive unit is employed in an electric vehicle to increase a range of the electric vehicle.
Clause 10: The system of any preceding clause, wherein the second cell chemistry generates a second charging profile and a second load profile, and wherein the electric drive unit is employed in an electric vehicle to improve performance of the electric vehicle.
Clause 11: The system of any preceding, wherein the power electronic converter selects the first set of energy storage systems or the at least a second set of energy storage systems to generate electrical energy to drive the motor.
Clause 12: The system of any preceding clause, wherein a combination of the first set of energy storage systems and the at least a second set of energy storage systems implements redundancy in the system.
Clause 13: The system of clause 1 above with any set of combinations of clauses 2 - 12 above.
Clause 14: A method, comprising: connecting, via a power electronic converter of an electric drive unit, a first set of energy storage systems comprising a first cell chemistry directed to energy density of the electric drive unit and at least a second set of energy storage systems, the at least a second set of energy storage systems comprising a second cell chemistry that is different from the first cell chemistry and that is directed to power density of the electric drive unit, wherein the power electronic converter acts as a traction inverter to convert a DC supply from the first set of energy storage systems and the at least a second set of energy storage systems to an AC supply to drive a motor of the electric drive unit.
Clause 15: The method of any preceding clause, further comprising: electrically isolating the first set of energy storage systems from the at least a second set of energy storage systems to ensure independent management of the first set of energy storage systems and the at least a second set of energy storage systems to control respective amounts of power drawn from the first set of energy storage systems and the at least a second set of energy storage systems, wherein the independent management is performed via a control system of the power electronic converter.
Clause 16: The method of any preceding clause, wherein the power electronic converter has a multi-level topology that is selected based on the motor employed by the system.
Clause 17: The method of any preceding clause, further comprising: packaging, respective energy storage systems of the first set of energy storage systems in a first type of packaging; and packaging, respective energy storage systems of the at least a second set of energy storage systems in a second type of packaging that is different from the first type of packaging.
Clause 18: The method of any preceding clause, wherein respective energy storage systems of the first set of energy storage systems and the at least a second set of energy storage systems have different voltage levels, different lifespans and are chargeable at different respective charging speeds.
Clause 19: The method of any preceding clause, wherein the first set of energy storage systems and the at least a second set of energy storage systems are batteries or electrical energy storage systems different from batteries.
Clause 20: The method of clause 14 above with any set of combinations of clauses 15 - 19 above.
Clause 21: A system, comprising: a first set of energy storage systems, the first set of energy storage systems comprising a first cell chemistry that is directed to energy density of an electric vehicle; at least a second set of energy storage systems, the at least a second set of energy storage systems comprising a second cell chemistry that is different from the first cell chemistry and that is directed to power density of the electric vehicle; and two or more power electronic converters that act as respective traction inverters to convert a DC supply from the first set of energy storage systems and the at least a second set of energy storage systems to an AC supply to drive a motor of the electric vehicle, wherein the first set of energy storage systems and the at least a second set of energy storage systems are connected via the two or more power electronic converters.
Clause 22: The system of any preceding clause, further comprising: one or more additional sets of energy storage systems that are connected to one another, the first set of energy storage systems and the at least a second set of energy storage systems via respective power electronic converters of the two or more power electronic converters, wherein the one or more additional sets of energy storage systems respectively comprise one or more cell chemistries that are different from one another, the first cell chemistry and the second cell chemistry, and wherein the one or more cell chemistries are respectively directed to different performance parameters of the electric vehicle.
Clause 23: The system of clause 21 above with any set of combinations of clauses 21 and 22 above.

## Claims

1. A system, comprising:
a first set of energy storage systems, the first set of energy storage systems comprising a first cell chemistry that is directed to energy density of an electric drive unit;
at least a second set of energy storage systems, the at least a second set of energy storage systems comprising a second cell chemistry that is different from the first cell chemistry and that is directed to power density of the electric drive unit; and
a power electronic converter that connects the first set of energy storage systems and the at least a second set of energy storage systems and that acts as a traction inverter to convert a direct current (DC) supply from the first set of energy storage systems and the at least a second set of energy storage systems to an alternating current (AC) supply to drive a motor of the electric drive unit.

2. The system according to claim 1, further comprising:
one or more additional sets of energy storage systems that are connected to one another, the first set of energy storage systems and the at least a second set of energy storage systems via the power electronic converter, wherein the one or more additional sets of energy storage systems respectively comprise one or more cell chemistries that are different from one another, the first cell chemistry and the second cell chemistry, and wherein the one or more cell chemistries are respectively directed to different performance parameters of the electric drive unit.

3. The system according to claim 1, wherein the first set of energy storage systems is electrically isolated from the at least a second set of energy storage systems to prevent current from rotating in the system and to ensure independent management of the first set of energy storage systems and the at least a second set of energy storage systems to control respective amounts of power drawn from the first set of energy storage systems and the at least a second set of energy storage systems, and wherein the independent management is performed via a control system of the power electronic converter.

4. The system according to claim 1, wherein the power electronic converter has a multi-level topology that is selected based on the motor employed by the system.

5. The system according to claim 1, wherein respective energy storage systems of the first set of energy storage systems and the at least a second set of energy storage systems comprise a plurality of cells.

6. The system according to claim 1, wherein respective energy storage systems of the first set of energy storage systems have a first type of packaging and respective energy storage systems of the at least a second set of energy storage systems have a second type of packaging that is different from the first type of packaging.

7. The system according to claim 1, wherein respective energy storage systems of the first set of energy storage systems and the at least a second set of energy storage systems have different voltage levels, different lifespans and are chargeable at different respective charging speeds.

8. The system according to claim 1, wherein the first set of energy storage systems and the at least a second set of energy storage systems are batteries or electrical energy storage systems different from batteries.

9. The system according to claim 1, wherein the first cell chemistry generates a first charging profile and a first load profile, and wherein the electric drive unit is employed in an electric vehicle to increase a range of the electric vehicle.

10. The system according to claim 1, wherein the second cell chemistry generates a second charging profile and a second load profile, and wherein the electric drive unit is employed in an electric vehicle to improve performance of the electric vehicle.

11. The system according to claim 1, wherein the power electronic converter selects the first set of energy storage systems or the at least a second set of energy storage systems to generate electrical energy to drive the motor.

12. The system according to claim 1, wherein a combination of the first set of energy storage systems and the at least a second set of energy storage systems implements redundancy in the system.

13. A method, comprising:
connecting, via a power electronic converter of an electric drive unit, a first set of energy storage systems comprising a first cell chemistry directed to energy density of the electric drive unit and at least a second set of energy storage systems, the at least a second set of energy storage systems comprising a second cell chemistry that is different from the first cell chemistry and that is directed to power density of the electric drive unit, wherein the power electronic converter acts as a traction inverter to convert a DC supply from the first set of energy storage systems and the at least a second set of energy storage systems to an AC supply to drive a motor of the electric drive unit.

14. The method according to claim 13, further comprising:
electrically isolating the first set of energy storage systems from the at least a second set of energy storage systems to ensure independent management of the first set of energy storage systems and the at least a second set of energy storage systems to control respective amounts of power drawn from the first set of energy storage systems and the at least a second set of energy storage systems, wherein the independent management is performed via a control system of the power electronic converter.

15. A system, comprising:
a first set of energy storage systems, the first set of energy storage systems comprising a first cell chemistry that is directed to energy density of an electric vehicle;
at least a second set of energy storage systems, the at least a second set of energy storage systems comprising a second cell chemistry that is different from the first cell chemistry and that is directed to power density of the electric vehicle; and
two or more power electronic converters that act as respective traction inverters to convert a DC supply from the first set of energy storage systems and the at least a second set of energy storage systems to an AC supply to drive a motor of the electric vehicle, wherein the first set of energy storage systems and the at least a second set of energy storage systems are connected via the two or more power electronic converters.
